# EUROPEAN PATENT SPECIFICATION

(11) **EP 3 125 816 B1**
(45) Date of publication and mention of the grant of the patent: **15.05.2019**
(21) Application number: 15715630.8
(22) Date of filing: 30.03.2015
(51) Int. Cl.: A61C 5/88, A61C 13/15

(54) **DENTAL WEDGE WITH INDUCTIVELY POWERED CURING LED**
ZAHNKEIL MIT INDUKTIV GESPEISTER HÄRTUNGS-LED
COIN DENTAIRE AYANT UNE DEL DE DURCISSEMENT À ALIMENTATION PAR INDUCTION

(30) Priority: 31.03.2014 NZ 62323614
(43) Date of publication of application: 08.02.2017
(73) Proprietor: DENTSPLY SIRONA Inc., York, PA 17401-2991 (US)
(72) Inventor: MCDONALD, Simon Paul, Katikati (NZ)
(74) Representative: Schiener, Jens
(86) International application number: PCT/US2015/023333
(87) International publication number: WO 2015/153454

(56) References cited:
- WO-A1-2014/210439
- US-A1- 2007 054 233
- US-A1- 2007 128 577
- US-A1- 2010 254 149
- US-A1- 2011 171 596
- US-B1- 6 220 858

## Description

### FIELD OF THE INVENTION

This invention relates generally to the field of restorative dentistry and more specifically to dental wedges used during tooth restoration and curing of dental restorative materials.

### BACKGROUND OF THE INVENTION

A dental wedge is an apparatus used during tooth restoration, usually along with dental matrix band and dental matrix band retainer. The main purpose of the dental wedge is to press the dental matrix against the tooth that is being restored. This allows for the matrix to seal the tooth and keep the dental restorative material in place. The other purpose of the dental wedge is to separate the teeth and allow enough space for the dentist to restore the tooth. The dental wedge also serves as a gingival margin seal to apply pressure and control bleeding.

Initially, dental wedges were made out of wood, but most current dental wedges are plastic. They come in various sizes to suit different interproximal areas.

When carrying out a direct restoration, using a dental composite resin, areas such as the gingival margin and interproximal areas are difficult to reach with a curing light. This leaves areas of uncured composite within the restoration. This may potential lead to distortion of the restoration. A majority of uncured composite material is found in the interproximal areas and in the deepest portions of the restoration.
US 2011/0171596 and US 6,220,858 disclose dental wedges.
US 2007/0128577 and US 2010/0254148 disclose curing lights.

### SUMMARY OF THE INVENTION

The invention is as defined in claims 1 and 5.

The dental device of the claimed invention aims to overcome obstacles by dental professionals during direct restoration procedures and is equally applicable to other types of tooth restorations. The present invention is a dental device used during restoration of a tooth, the dental device comprising a dental wedge and a first light emitting diode disposed on or in the dental wedge for curing a first amount of dental restorative material at a restoration site on the tooth. The dental wedge may comprise a first and second sidewall where the first sidewall aligns adjacent to the restoration site or in close proximity to the restoration site. The light emitting diode is selected to provide light output at a frequency of 400-500 nm and is inductively powered by a separate power supply. The power supply is part of a primary circuit also comprising at least a first capacitor and a primary induction coil. The primary circuit may further comprise at least a first resistor to prevent overloading of the primary circuit. The light emitting diode is part of a secondary circuit further comprising at least a first capacitor and a secondary induction coil. The secondary circuit may further comprise at least a first resistor to prevent overloading of the secondary circuit. The secondary circuit may embedded within the first sidewall of the dental wedge or affixed to the inner or outer surface of the dental wedge. The dental wedge is composed of a transparent or highly transparent material to facilitate and promote transmission of the light output from the light emitting diode to the restoration site on the tooth.

### BRIEF DESCRIPTION OF THE DRAWINGS

Figure 1 is a side elevation view of an embodiment of the present invention.
Figure 2A and Figure 2B are top plan views of another embodiment of the present invention.
Figure 3 is a perspective view of the embodiment of the present invention shown in Figure 2.
Figure 4A and Figure 4B are rear elevation views of the embodiment of the present invention shown in Figure 2A and Figure 2B
Figure 5 is a circuit schematic diagram of an embodiment of the present invention.
Figure 6 is a top plan view of another embodiment of the present invention.
Figure 7 is a circuit schematic diagram of another embodiment of the present invention.
Figures 8-9 are perspective views of the embodiment of the present invention shown in Figure 2.

### DETAILED DESCRIPTION OF THE DRAWINGS

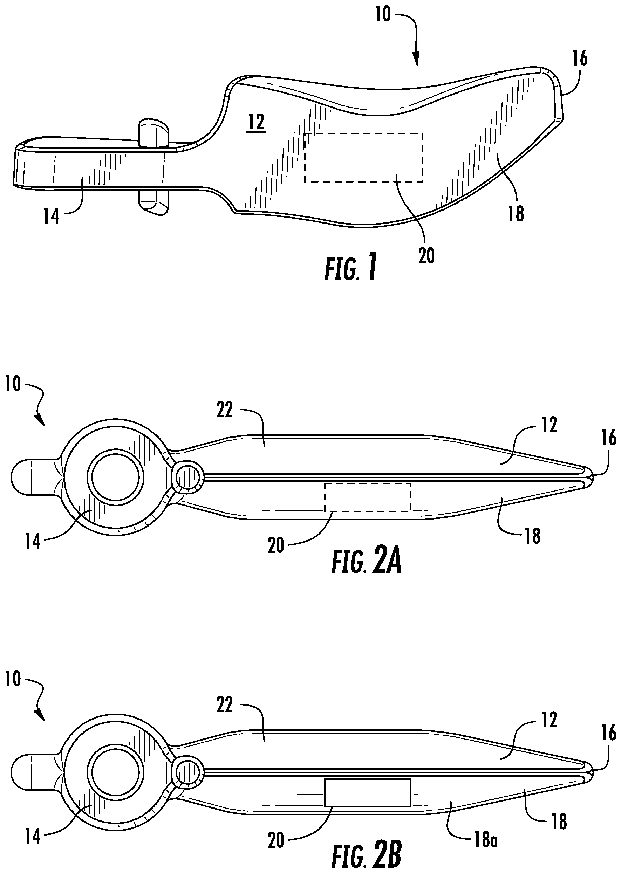

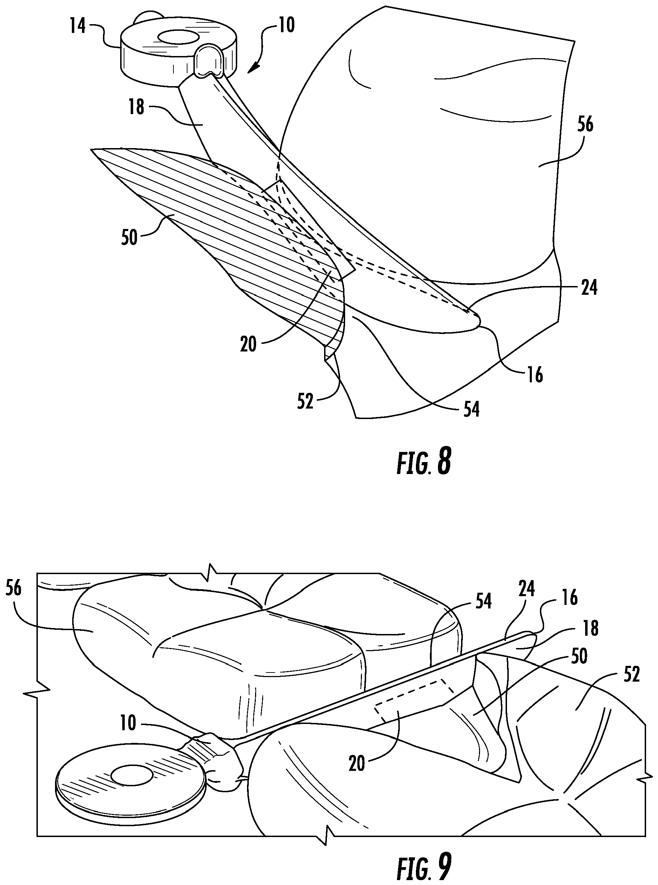

Figures 1-7 show a first and second embodiment of the present inventive dental device and system. Figures 8-9 show the inventive dental device in use in a restoration of a tooth. Whenever possible the same reference numbers will be used to identify the same or similar components multiple figures.

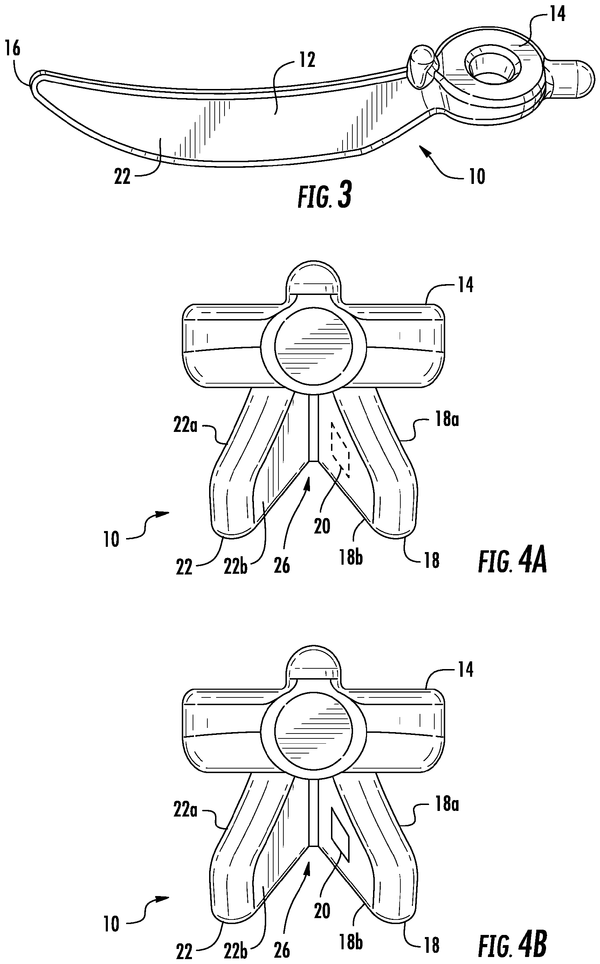

Referring first to Figure 1, a dental wedge 10 is shown comprising a body 12 and handle 14, where the body 12 extends from a tip 16 to the handle 14. The body 12 further comprises a first sidewall 18 with a light-emitting diode circuit 20 embedded therein or affixed thereon. Figure 2-4 show a second variant of the dental wedge 10 also with a light emitting diode circuit 20. The dental wedge 10 comprises a body 12 and handle 14, where the body extends from a tip 16 to the handle 14. The body 12 further comprises a first sidewall 18 and second sidewall 22. The first and second sidewalls 18, 22 converge towards each other and join together at a ridge or spine 24. As seen in Figure 3, the ridge or spine 24 may curve as it extends between the handle 14 and tip 16. The bottom margin or edge 26 of the first and second sidewalls 18, 22 may also be curved.

Referring to Figures 2 and 4, the sidewalls 18, 22 are spaced apart to form and internal void or space 26 there between. The first and second sidewalls 18, 22 each have an external surface 18a, 22a facing outward and an internal surface 18b, 22b facing inward and defining borders of the internal void 26. The dental wedge 10 of both Figures 1 and 2 are composed of a transparent or substantially translucent material to facilitate maximum transmission of the curing light output from the light emitting diode circuit 20 to the restoration site on the tooth being restored. Suitable polymeric materials for this purpose include polycarbonates (e.g., Lexan® polycarbonate), acrylics (e.g., polymethylmethacrylate), polyesters (e.g., polyethylene terephthalate) and polyolefins (e.g., polyethylene, polypropylene). The dental wedge 10 may be wholly or partially tinted with a slight coloration as color coding for different wedge sizes.

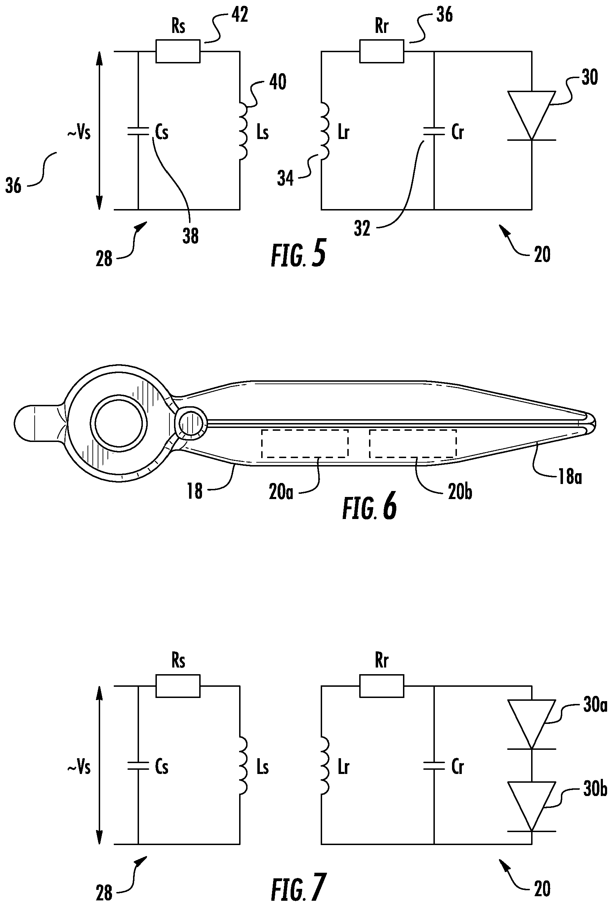

Turning to Figure 5, the light emitting diode circuit 20 is the "secondary" circuit in a system comprising the light emitting diode circuit 20 and a "primary" power supply circuit 28. In this arrangement the power supply circuit 28 is a transmitter and the light emitting diode circuit 20 is a receiver. The light emitting diode circuit 20 comprises at least a first light emitting diode 30, at least a first capacitor 32, and a secondary inductor coil 34. The light emitting diode circuit 20 may also comprise additional circuit components 36, such as at least a first resistor to prevent overloading of the circuit 20. The power supply circuit 28 comprises a power source 36, at least a first capacitor 38, and a primary inductor coil 40. The power supply circuit 28 may comprise additional circuit components 42, such as at least a first resistor, to prevent overloading of the circuit.

In this arrangement the power supply circuit 28 provides power to the light emitting diode circuit 20 via resonant inductive coupling. Resonant coupling improves the efficiency of the system and avoids the requirement in non-resonant coupling to have the fields of the primary and secondary inductor coils overlapping. With resonant coupling the power supply circuit 28 and light emitting diode circuit 20 are capacitively loaded forming "tuned" LC (inductor-capacitor) circuits. When the primary and secondary inductor coils 40, 34 resonate at a common frequency power is efficiently transmitted between the coils at a range of a few times the coil diameters.

Inductive power transfer wirelessly provides electrical power from a transmitter, namely the power supply circuit 28 in the present invention, to a receiver, namely, the light emitting diode circuit 20 in the present invention to activate the light emitting diode 30. The light emitting diode 30 in its activated state provides light energy to the restoration site at a wavelength necessary for curing a first amount of dental restorative material used in restoring the tooth. This wireless connection provides a number of advantages over traditional hardwired connections. The power supply circuit 28 will stay outside of the patient's mouth until such time the light emitting diode 30 is to be activated reducing the risk of electrical shock. A relatively high level of electrical isolation can be achieved between the power supply circuit 28 and light emitting diode circuit 20.

To accommodate the size considerations associated with the dental wedges of Figures 1 and 2 and the interdental space 54 between the tooth being restored 52 and the adjacent tooth 56 the light emitting diode circuit 20 is sized to be embedded within or affixed to the dental wedge 10. This is necessary to avoid interfering with the function of the dental wedge 10 and/or filling the limited interdental space where the dental professional must work. The use of thin film LEDs and circuit components satisfies these considerations. Preferably the light emitting diode circuit 20 is embedded in the dental wedge first sidewall 18 (Figure 1, 2A) which is the side addressing the tooth being restored. The components of both the power source circuit 28 and light emitting diode circuit 20 are selected to cause the light emitting diode 30 to emit steady blue light output in the range of 400-500 nm (with a peak wavelength of 460 nm), the preferred wavelength for curing dental restorative materials. In other embodiments the light emitting diode circuit may be affixed to the outer surface 18a of the first sidewall 18 (Figure 2B) or affixed to the inner surface 18b of the first sidewall (Figure 4B). In other embodiments more than a first light emitting diode circuit 20a, 20b (Figure 6) may be used and/or each light emitting diode circuit 20 may comprise more than one light emitting diode 30a, 30b (Figure 7).

In operation, and as shown in Figures 8-9, the dental professional prepares restoration site 50 on the tooth being restored 52 and inserts the dental wedge 10 in the interdental space 54 between the tooth being restored 50 and an adjacent tooth 56. The dental wedge first sidewall 18 including the LED circuit 20 is adjacent the tooth being restored 52 and preferably aligns with the restoration site 50 or is in close proximity to the restoration site 50. The dental professional carries out the direct restoration procedure in the usual manner. When the dental professional is ready to cure the first amount of dental restorative material 58 the power source circuit 28 is brought close to the patient's jaw 60 to inductively power the light emitting diode circuit 20. Applying voltage across the light emitting diode 30 activates the light emitting diode and generates the light output required to cure the dental restorative material. As demonstrated in these figures the present inventive dental device will aid with the curing of dental restorative material around the gingival and interproximal areas where use of traditional curing lights may not be sufficient to completely and quickly cure the dental restoration material.

While the present invention has been described in connection with a specific application, this application is exemplary in nature and is not intended to be limiting on the possible applications of this invention. It will be understood that modifications and variations may be effected without departing from the spirit and scope of the present invention. It will be appreciated that the present disclosure is intended as an exemplification of the invention and is not intended to limit the invention to the specific embodiments illustrated and described. The disclosure is intended to cover, by the appended claims, all such modifications as fall within the scope of the claims.

## Claims

1. A dental device used during restoration of a tooth, the dental device comprising:
a. a dental wedge; and
b. a first light emitting diode operatively associated with the dental wedge for curing a first amount of dental restorative material at a restoration site on the tooth, the first light emitting diode affixed to or embedded in the dental wedge.

2. The dental device of Claim 1 wherein the light emitting diode is inductively powered.

3. The dental device of Claim 1 further comprising a power supply circuit comprising a power source, at least a first capacitor, and a primary inductor coil wherein the power source inductively powers the first light emitting diode.

4. The dental device of Claim 3 further comprising a light emitting diode circuit comprising the first light emitting diode, at least a first capacitor, and a secondary inductor coil and the primary and secondary inductor coils are resonantly coupled.

5. A dental wedge and curing light system used during restoration of a tooth comprising:
a. a dental wedge;
b. a first light emitting diode operatively associated with the dental wedge for curing a first amount of dental restorative material at a restoration site on the tooth, the first light emitting diode affixed to or embedded in the dental wedge; and
c. a power source inductively coupled to the first light emitting diode.

6. The dental device of Claim 1 or the system of Claim 5 wherein the dental wedge comprises a first sidewall and the light emitting diode is embedded in the first sidewall.

7. The dental device of Claim 1 or the system of Claim 5 wherein the dental wedge comprises a first sidewall with an outer surface and the first light emitting diode is disposed on the outer surface of the first sidewall.

8. The dental device of Claim 1 or the system of Claim 5 wherein the dental wedge comprises a first sidewall with an inner surface and the first light emitting diode is disposed on the inner surface of the first sidewall.

9. The dental device of Claim 1 or the system of Claim 5 wherein the light emitting diode produces light output having a frequency in the range of 400 - 500 nm.

10. The dental device of Claim 1 or the system of Claim 5 further comprising a light emitting diode circuit comprising the first light emitting diode, at least a first capacitor, and a secondary inductor coil.

11. The dental device or the system of Claim 10 wherein the light emitting diode circuit further comprises at least a first resistor.

12. The system of Claim 5 further comprising a power supply circuit comprising the power source, a first capacitor, and a primary inductor coil.

13. The system of Claim 5 wherein the power source transmits power to the light emitting diode by resonant inductive coupling.

14. The system of Claim 10 further comprising a power supply circuit comprising the power source, at least a first capacitor, and a primary inductor coil wherein the primary and secondary inductor coils are resonantly coupled.

15. The dental device of Claim 1 or the system of Claim 5 wherein the dental wedge is composed of a transparent or translucent material to facilitate maximum light transmission to the restoration site.

## Patentansprüche

1. Dentalvorrichtung, die während der Restaurierung eines Zahns verwendet wird, wobei die Dentalvorrichtung umfasst:
a. einen Dentalkeil; und
b. eine erste Leuchtdiode, die wirkend mit dem Dentalkeil zum Aushärten einer ersten Menge an Dentalrestaurierungsmaterial an einem Restaurierungsort an dem Zahn verbunden ist, wobei die erste Leuchtdiode an dem Dentalkeil angebracht oder darin eingebettet ist.

2. Dentalvorrichtung nach Anspruch 1, wobei die Leuchtdiode induktiv mit Strom versorgt wird.

3. Dentalvorrichtung nach Anspruch 1, ferner umfassend eine Stromversorgungsschaltung, die eine Stromquelle, mindestens einen ersten Kondensator und eine primäre Induktionsspule umfasst, wobei die Stromquelle die erste Leuchtdiode induktiv mit Strom versorgt.

4. Dentalvorrichtung nach Anspruch 3, ferner umfassend eine Leuchtdiodenschaltung, welche die erste Leuchtdiode, mindestens einen ersten Kondensator und eine sekundäre Induktionsspule umfasst, und wobei die primären und sekundären Induktionsspulen resonant gekoppelt sind.

5. Dentalkeil und Aushärtelichtsystem, das während der Restaurierung eines Zahns verwendet wird, umfassend:
a. einen Dentalkeil;
b. eine erste Leuchtdiode, die wirkend mit dem Dentalkeil zum Aushärten einer ersten Menge an Dentalrestaurierungsmaterial an einem Restaurierungsort an dem Zahn verbunden ist, wobei die erste Leuchtdiode an dem Dentalkeil angebracht oder darin eingebettet ist; und
c. eine Stromquelle, die mit der ersten Leuchtdiode induktiv gekoppelt ist.

6. Dentalvorrichtung nach Anspruch 1 oder System nach Anspruch 5, wobei der Dentalkeil eine erste Seitenwand umfasst und die Leuchtdiode in der ersten Seitenwand eingebettet ist.

7. Dentalvorrichtung nach Anspruch 1 oder System nach Anspruch 5, wobei der Dentalkeil eine erste Seitenwand mit einer Außenfläche umfasst und die erste Leuchtdiode auf der Außenfläche der ersten Seitenwand angeordnet ist.

8. Dentalvorrichtung nach Anspruch 1 oder System nach Anspruch 5, wobei der Dentalkeil eine erste Seitenwand mit einer Innenfläche umfasst und die erste Leuchtdiode auf der Innenfläche der ersten Seitenwand angeordnet ist.

9. Dentalvorrichtung nach Anspruch 1 oder System nach Anspruch 5, wobei die Leuchtdiode eine Lichtausbeute mit einer Frequenz im Bereich von 400 bis 500 nm erzeugt.

10. Dentalvorrichtung nach Anspruch 1 oder System nach Anspruch 5, ferner umfassend eine Leuchtdiodenschaltung, welche die erste Leuchtdiode, mindestens einen ersten Kondensator und eine sekundäre Induktionsspule umfasst.

11. Dentalvorrichtung oder System nach Anspruch 10, wobei die Leuchtdiodenschaltung ferner mindestens einen ersten Widerstand umfasst.

12. System nach Anspruch 5, ferner umfassend eine Stromversorgungsschaltung, welche die Stromquelle, einen ersten Kondensator und eine primäre Induktionsspule umfasst.

13. System nach Anspruch 5, wobei die Stromquelle Strom zur Leuchtdiode durch resonante induktive Kopplung überträgt.

14. System nach Anspruch 10, ferner umfassend eine Stromversorgungsschaltung, welche die Stromquelle, mindestens einen ersten Kondensator und eine primäre Induktionsspule umfasst, wobei die primären und sekundären Induktionsspulen resonant gekoppelt sind.

15. Dentalvorrichtung nach Anspruch 1 oder System nach Anspruch 5, wobei der Dentalkeil aus einem transparenten oder durchsichtigen Material besteht, um eine maximale Lichtdurchlässigkeit zum Restaurierungsort zu erleichtern.

## Revendications

1. Dispositif dentaire utilisé pendant la restauration d'une dent, le dispositif dentaire comprenant :
a. un coin dentaire ; et
b. une première diode électroluminescente associée de manière opérationnelle au coin dentaire pour la polymérisation d'une première quantité de matériau de restauration dentaire sur un site de restauration de la dent, la première diode électroluminescente étant fixée sur ou noyée dans le coin dentaire.

2. Dispositif dentaire selon la revendication 1, dans lequel la diode électroluminescente est alimentée par induction.

3. Dispositif dentaire selon la revendication 1 comprenant en outre un circuit d'alimentation en énergie comprenant une source d'énergie, au moins un premier condensateur et une bobine d'inductance primaire, dans lequel la source d'énergie alimente par induction la première diode électroluminescente.

4. Dispositif dentaire selon la revendication 3 comprenant en outre un circuit de diode électroluminescente comprenant la première diode électroluminescente, au moins un premier condensateur, et une bobine d'inductance secondaire et les bobines d'inductance primaire et secondaire sont couplées par résonance.

5. Système d'éclairage du coin dentaire et de polymérisation utilisé pendant la restauration d'une dent, comprenant :
a. un coin dentaire ;
b. une première diode électroluminescente associée de manière opérationnelle au coin dentaire afin de procéder à la polymérisation d'une première quantité de matériau de restauration dentaire sur un site de restauration sur la dent, la première diode électroluminescente fixée sur ou encastrée dans le coin dentaire ; et
c. une source d'énergie couplée par induction à la première diode électroluminescente.

6. Dispositif dentaire selon la revendication 1 ou système selon la revendication 5, dans lequel le coin dentaire comprend une première paroi latérale et la diode électroluminescente est intégrée dans la première paroi latérale.

7. Dispositif dentaire selon la revendication 1 ou système selon la revendication 5, dans lequel le coin dentaire comprend une première paroi latérale avec une surface extérieure et la première diode électroluminescente est disposée sur la surface extérieure de la première paroi latérale.

8. Dispositif dentaire selon la revendication 1 ou système selon la revendication 5, dans lequel le coin dentaire comprend une première paroi latérale avec une surface intérieure et la première diode électroluminescente est disposée sur la surface intérieure de la première paroi latérale.

9. Dispositif dentaire selon la revendication 1 ou système selon la revendication 5, dans lequel la diode électroluminescente produit un flux lumineux ayant une fréquence comprise entre 400 et 500 nm.

10. Dispositif dentaire selon la revendication 1 ou système selon la revendication 5 comprenant en outre un circuit de diode électroluminescente comprenant la première diode électroluminescente, au moins un premier condensateur, et une bobine d'induction secondaire.

11. Dispositif dentaire ou système selon la revendication 10, dans lequel le circuit de diode électroluminescente comprend en outre au moins une première résistance.

12. Système selon la revendication 5 comprenant en outre un circuit d'alimentation en énergie comprenant la source d'énergie, un premier condensateur et une bobine d'inductance primaire.

13. Système selon la revendication 5, dans lequel la source d'énergie transmet la puissance à la diode électroluminescente par couplage inductif résonant.

14. Système selon la revendication 10 comprenant en outre un circuit d'alimentation en énergie comprenant la source d'énergie, au moins un premier condensateur et une bobine d'inductance primaire dans lequel les bobines d'inductance primaire et secondaire sont couplées par résonance.

15. Dispositif dentaire selon la revendication 1 ou système selon la revendication 5, dans lequel le coin dentaire est composé d'un matériau transparent ou translucide pour faciliter une transmission maximale de la lumière au site de restauration.
